# EUROPEAN PATENT APPLICATION

(11) **EP 2 119 954 A1**
(43) Date of publication of application: **18.11.2009**
(21) Application number: 07829848.6
(22) Date of filing: 16.10.2007
(51) Int. Cl.: F21S 2/00, F21V 23/00, G02F 1/1333, G02F 1/13357, G09F 9/00, F21Y 103/00

(54) **ILLUMINATION DEVICE FOR DISPLAY DEVICE AND DISPLAY DEVICE WITH THE SAME**

(30) Priority: 14.03.2007 JP 2007064315
(71) Applicant: Sharp Kabushiki Kaisha, Osaka-shi Osaka 545-8522 (JP)
(72) Inventor: KAMADA, Kentaro, Osaka-shi, Osaka 545-8522 (JP)
(74) Representative: Müller - Hoffmann & Partner
(86) International application number: PCT/JP2007/070114
(87) International publication number: WO 2008/111253

(57) **Abstract**

An illumination device for a display device, the illumination device including a chassis (1) that has lamps (4) mounted on its front face and also has a connector (5) mounted on its rear face and also including an inverter unit (6) having mounted on it an inverter circuit (7) and an inverter-side connector. A positioning through-hole (8) is provided in the inverter unit (6), a positioning marking (9) is provided on the chassis (1), and the positioning marking (9) is placed at a position viewable from the positioning through-hole (8) with the inverter unit (6) attached to the rear face of the chassis (1). When the connector (5) and the inverter-side connector are connected to each other, the positional relationship between the chassis (1) and the inverter unit (6) is fixed. The illumination device can be used as backlight for liquid crystal TV receiver.

## Description

### Technical Field

The present invention relates to an illumination device for a display device and a display device provided therewith. The present invention particularly relates to: an illumination device for a display device in which an inverter unit is fitted to a rear face of a chassis on a front face of which a lamp is disposed; and a display device.

### Background Art

In a commonly used conventional illumination device for a display device, an example of which is disclosed in Patent Document 1, a harness (also referred to as "lead") extending from a chassis on a front face of which a lamp is disposed is connected to an inverter unit directly or via a connector. This structure, in which the positional relation between the chassis and the inverter unit is not fixed when the connection of the inverter unit is completed, requires a separate step in the fabrication process for fixing the positional relation between the chassis and the inverter unit.

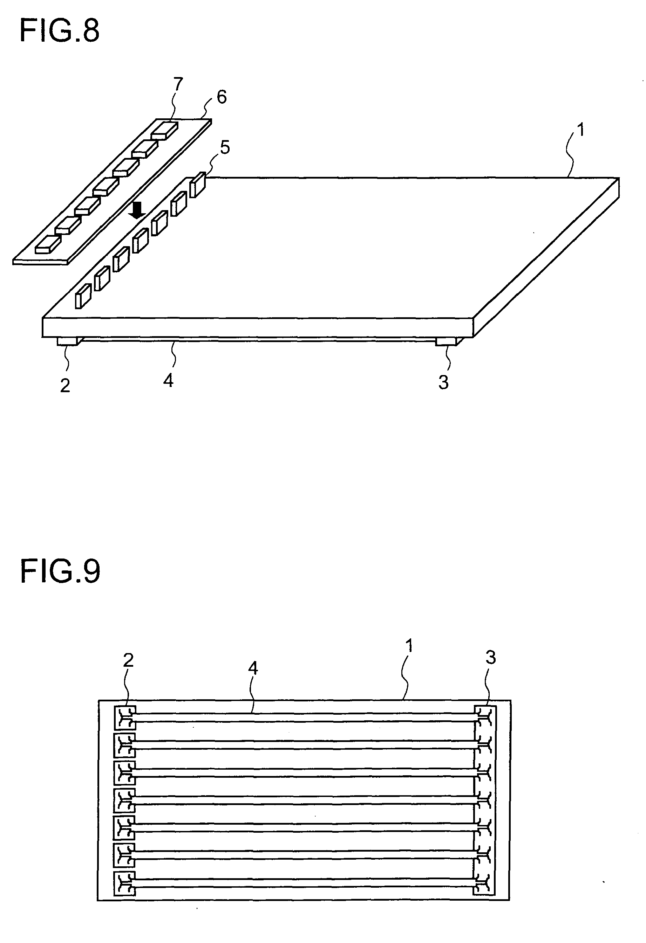

To solve this problem, the illumination device for a display device as shown in Figs. 8 and 9 has been devised. Here, Fig. 8 is a rear face-side perspective view and Fig. 9 is a front view. The illumination device for a display device shown in Figs. 8 and 9 is designed such that the positional relation between a chassis and an inverter unit is fixed at the same time when the connection of the inverter unit is completed.

In the illumination device for a display device shown in Figs. 8 and 9, a plurality of lamps 4 are disposed on the front face of the chassis 1 with one end of each of the lamps 4 held by a corresponding one of first holders 2 and the other end of each of the lamps 4 held by a second holder 3. On the rear face of the chassis 1, there are provided the same number of connectors 5 as the number of the lamps 4 to be placed in positions corresponding to the first holders 2. One end-side terminals of the lamps 4 are each electrically connected to the connector terminal of a corresponding one of the connectors 5 via a corresponding one of the first holders 2, which are electrically conductive, and the other end-side terminals of the lamps 4 are commonly connected to ground potential via the second holder 3, which is electrically conductive.

An inverter unit 6 has the same number of inverter circuits 7 as the number of the lamps 4. In the inverter unit 6, on a face opposite to a face on which the inverter circuits 7 are disposed, there are provided inverter-side connectors (not shown) each making a pair with a corresponding one of the connectors 5. One output terminal of each of the inverter circuits 7 is electrically connected to the connector terminal of a corresponding one of the inverter-side connectors, and the other output terminal of each of the inverter circuits 7 is connected to ground potential.

When the inverter unit 6 is fitted to the rear face of the chassis 1 in the direction indicated by an arrow in Fig. 8, the connectors 5 of the chassis 1 are each connected to a corresponding one the inverter-side connectors (not shown) of the inverter unit 6, and simultaneously, the positional relation between the chassis 1 and the inverter unit 6 is fixed.

Patent Document: JP-A-H05-119311 Publication (Figs. 1 and 4)

### Disclosure of the Invention

### Problems to be Solved by the Invention

However, in the illumination device for a display device shown in Figs. 8 and 9, connection points of the connectors 5 of the chassis 1 to the inverter-side connectors (not shown) of the inverter unit 6 are hidden by the main body of the inverter unit 6 from the view of a worker. As a result, the worker has to connect the connectors 5 of the chassis 1 to the inverter-side connectors (not shown) of the inverter unit 6 without seeing the connection points, and this makes it disadvantageously difficult to fit the inverter unit 6 to the chassis 1.

The present invention has been made in view of the foregoing, and an object of the present invention is to provide: an illumination device for a display device that is designed such that the positional relation between a chassis and an inverter unit is fixed at the same time when the connection of the inverter unit is completed and that the inverter unit can be fitted to the chassis with ease; and a display device provided with this illumination device.

### Means for Solving the Problem

To achieve the above object, according to one aspect of the present invention, an illumination device for a display device includes: a chassis having a lamp disposed on a front face thereof and a connector provided on a rear face thereof; and an inverter unit provided with an inverter circuit and an inverter-side connector that functions in combination with the connector, a connector terminal of the connector being electrically connected to a terminal of the lamp, a connector terminal of the inverter-side connector being electrically connected to an output terminal of the inverter circuit, and positional relation between the chassis and the inverter unit being fixed by connecting the connector and the inverter-side connector. Here, a positioning through hole is provided in the inverter unit and a positioning marking is provided on the chassis to be positioned such that the positioning marking is visible through the positioning through hole when the inverter unit is fitted to a rear face of the chassis.

In the manufacturing process of the illumination device for a display device having this structure, a worker can determine the position of the inverter unit by aligning the positioning through hole with the positioning marking, and attach the inverter unit to the rear face of the chassis. In this way, the inverter unit can be easily attached to the chassis.

In the illumination device for a display device structured as described above, it is preferable that a plurality of positioning through hole and positioning marking combinations be provided as the positioning through hole and the positioning marking. This makes it easier to properly position the inverter unit.

To achieve the above object, according to another aspect of the present invention, a display device (such as a television receiver) includes the illumination device for a display device structured as described above.

### Advantages of the Invention

According to the present invention, it is possible to realize: an illumination device for a display device that is designed such that the positional relation between a chassis and an inverter unit is fixed at the same time when the connection of the inverter unit is completed, and that the inverter unit can be attached to the chassis with ease; and a display device provided therewith.

### Brief Description of Drawings

[Fig. 1] A rear face-side perspective view of an example of an illumination device for a display device according to the present invention.
[Fig. 2] A front view of the example of the illumination device for a display device according to the present invention.
[Fig. 3] A rear face-side perspective view of another example of the illumination device for a display device according to the present invention.
[Fig. 4] A front view of the another example of the illumination device for a display device according to the present invention.
[Fig. 5] A rear face-side perspective view of still another example of the illumination device for a display device according to the present invention.
[Fig. 6] A front view of the still another example of the illumination device for a display device according to the present invention.
[Fig. 7] An exploded perspective view of a liquid crystal television receiver as an example of a display device according to the present invention.
[Fig. 8] A rear face-side perspective view of a conventional illumination device for a display device.
[Fig. 9] A front view of the conventional illumination device for a display device.

### List of Reference Symbols

- 1: Chassis
- 2: First holder
- 3: Second holder
- 4: Lamp
- 5: Connector
- 6, 6', 6": Inverter unit
- 7: Inverter circuit
- 8: Positioning through hole
- 9: Positioning marking
- 10: Front cabinet
- 11: Rear cabinet
- 12: Transmissive liquid crystal display unit
- 13: Tuner
- 14: Power supply
- 15: Stand

### Best Mode for Carrying Out the Invention

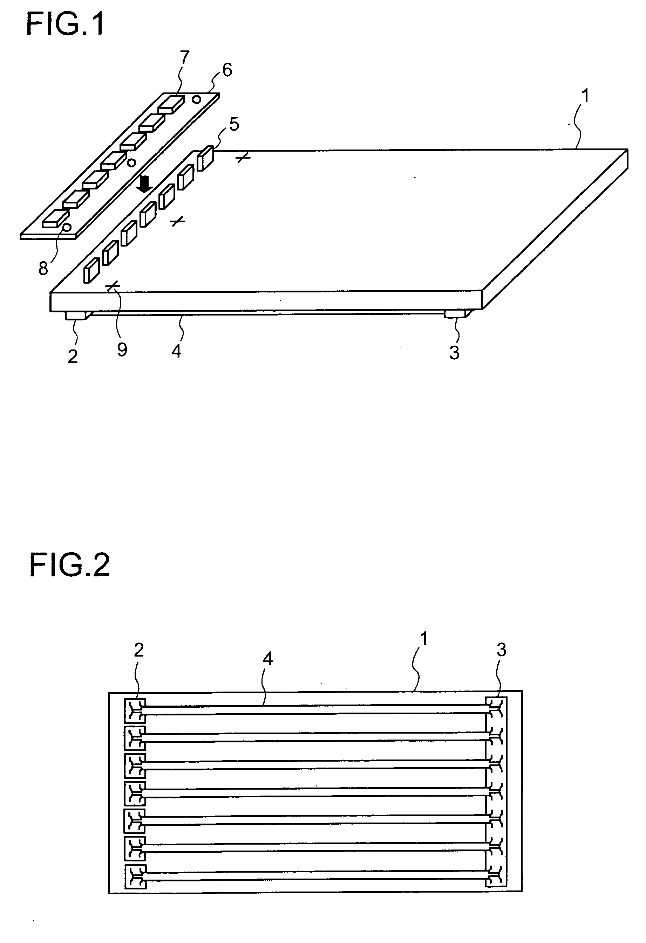

Hereinafter, descriptions will be given of embodiments of the present invention with reference to the accompanying drawings. An example of an illumination device for a display device according to the present invention is shown in Figs. 1 and 2. Fig. 1 is a rear face-side perspective view, and Fig. 2 is a front view. In Figs 1 and 2, the same parts as those in Figs. 8 and 9 are identified by the same reference signs.

In the illumination device for a display device according to the present invention shown in Figs. 1 and 2, a plurality of lamps 4 are disposed on the front face of the chassis 1. One end of each of the lamps 4 is held by a corresponding one of first holders 2, and the other end of each of the lamps 4 is held by a second holder 3. Furthermore, an optical sheet is provided to cover the front face of the chassis 1 with the lamps 4 located between the optical sheet and the front face of the chassis 1. Moreover, on the rear face of the chassis 1, the same number of connectors 5 as the number of the lamps 4 are provided one in each of positions corresponding to the first holders 2. One end-side terminals of the lamps 4 are each electrically connected to the connector terminal of a corresponding one of the connectors 5 via a corresponding one of the first holders 2, which are conductive, and the other end-side terminals of the lamps 4 are commonly connected to ground potential via the second holder 3, which is conductive.

An inverter unit 6 has the same number of inverter circuits 7 as the number of the lamps 4. In the inverter unit 6, on a face opposite to a face on which the inverter circuits 7 are disposed, there are provided inverter-side connectors (not shown) each making a pair with a corresponding one of the connectors 5. One output terminal of each of the inverter circuits 7 is electrically connected to the connector terminal of a corresponding one of the inverter-side connectors, and the other output terminal of each of the inverter circuits 7 is connected to ground potential. The inverter circuits 7 are each a circuit that converts a received voltage into a voltage having a predetermined frequency (e.g., several tens of kHz) and outputs it as an output voltage.

In the illumination device for a display device according to the present invention shown in Figs. 1 and 2, a plurality of positioning through holes 8 are provided in the inverter unit 6, and a plurality of positioning markings 9 are provided on the chassis 1. The positioning markings 9 are positioned such that they are each visible through a corresponding one the positioning through holes 8 in the state in which the inverter unit 6 is attached to the rear face of the chassis 1. The positioning markings 9 may be provided in any form, examples of which include markings formed by a method such as engraving or ink printing.

The manufacturing process of the illumination device for a display device according to the present invention shown in Figs. 1 and 2 includes the attachment of the inverter unit 6 to the rear face of the chassis 1 in the direction indicated by an arrow in Fig. 1. Here, connection points between the connectors 5 of the chassis 1 and the inverter-side connectors (not shown) of the inverter unit 6 are hidden by the main body of the inverter unit 6 from the view of a worker. With the structure of the illumination device for a display device according to the present invention shown in Figs. 1 and 2, however, the worker can determine the position of the inverter unit 6 by aligning the positioning through holes 8 each with a corresponding one of the positioning markings 9, and attach the inverter unit 6 to the rear face of the chassis 1. In this way, the attachment of the inverter unit 6 to the chassis 1 can be performed with ease.

Thus, when the inverter unit 6 is attached to the rear face of the chassis 1 in the direction indicated by the arrow in Fig. 1, the connectors 5 of the chassis 1 are each connected to a corresponding one the inverter-side connectors (not shown) of the inverter unit 6, and simultaneously, the positional relation between the chassis 1 and the inverter unit 6 is fixed.

Incidentally, although a plurality of positioning through hole 8 and positioning marking 9 combinations are provided in the illumination device for a display device according to the present invention shown in Figs. 1 and 2, there may be provided a single positioning through hole 8 and positioning marking 9 combination instead. It should be noted, however, that it is more preferable for easier positioning that a plurality of positioning through hole 8 and positioning marking 9 combinations be provided.

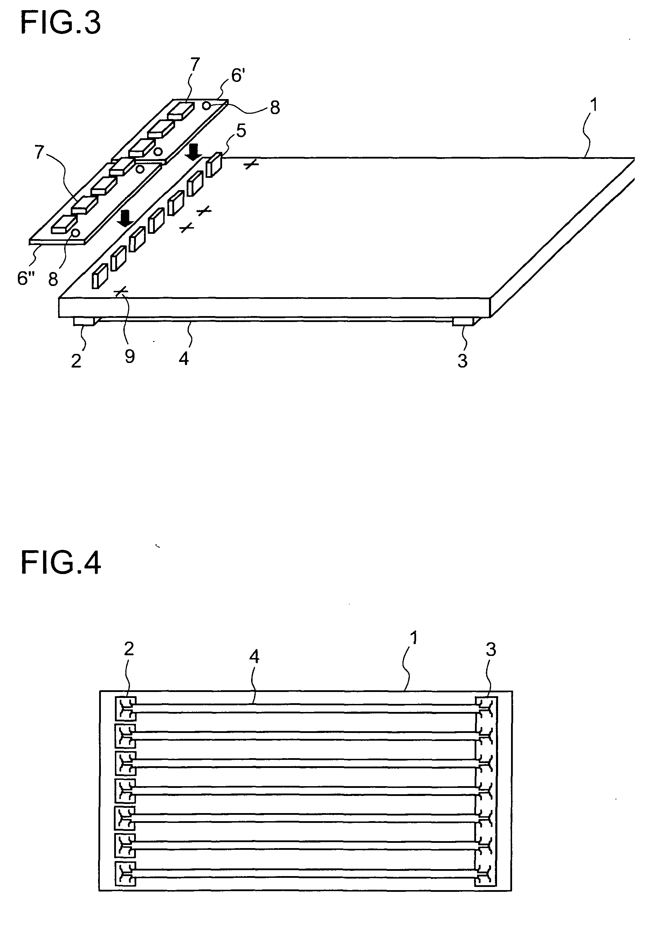

Another example of the illumination device for a display device according to the present invention is shown in Figs. 3 and 4. Fig. 3 is a rear face-side perspective view and Fig. 4 is a front view. In Figs 3 and 4, the same parts as those in Figs. 1 and 2 are identified by the same reference signs, and detailed descriptions thereof will be omitted.

The illumination device for a display device according to the present invention shown in Figs. 3 and 4 is provided with two inverter units 6' and 6" formed by dividing the inverter unit 6 of the illumination device for a display device according to the present invention shown in Figs. 1 and 2 into two, and the inverter units 6' and 6" are each provided with a plurality of inverter circuits 7 and a plurality of positioning through holes 8. Since each of the plurality of inverter units provided in the illumination device for a display device according to the present invention shown in Figs. 3 and 4 are smaller than the inverter unit of the illumination device for a display device according to the present invention shown in Figs. 1 and 2, they can be attached to the chassis 1 still more easily.

Although the inverter unit is divided into two in the illumination device for a display device according to the present invention shown in Figs. 3 and 4, the inverter unit may be divided into three or more instead.

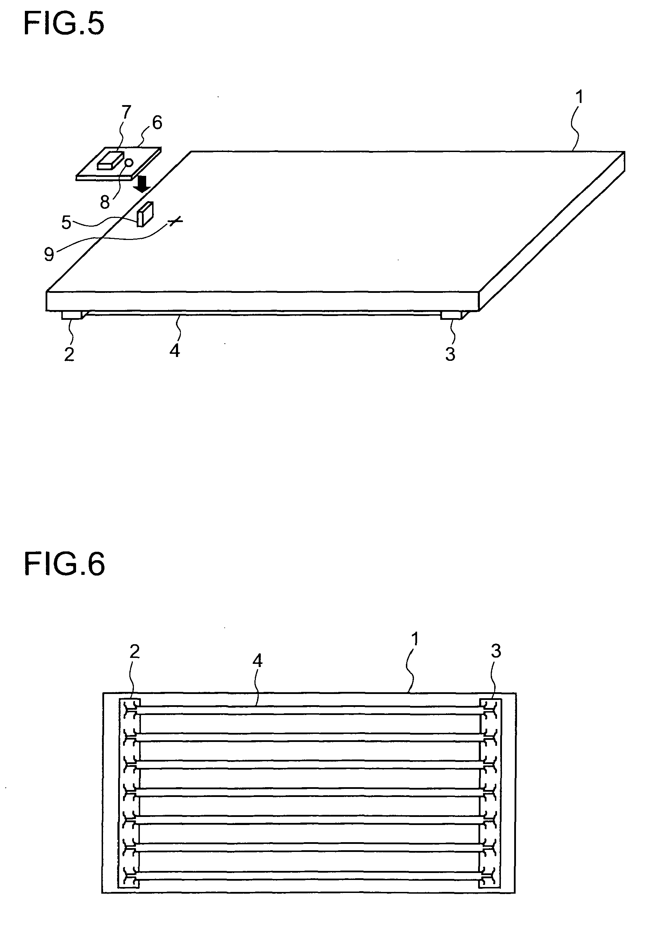

Still another example of the illumination device for a display device according to the present invention is shown in Figs. 5 and 6. Fig. 5 is a rear face-side perspective view and Fig. 6 is a front view. In Figs 5 and 6, the same parts as those in Figs. 1 and 2 are identified by the same reference signs, and detailed descriptions thereof will be omitted.

In the illumination device for a display device according to the present invention shown in Figs. 5 and 6, used as the lamps 4 are lamps that can be driven in parallel, and one end-side terminals thereof are electrically connected commonly to a connector terminal of a single connector 5 via a conductive first holder 2. As a result, a single inverter circuit 7 is provided on the inverter unit 6. In this case as well, in which the connection point between the connector 5 of the chassis 1 and an inverter-side connector (not shown) of the inverter unit 6 is hidden by the main body of the inverter unit 6 from the view of the worker, provisions of a positioning through hole 8 in the inverter unit 6 and of a positioning marking 9 on the chassis 1 make it easier to fit the inverter unit 6 to the chassis 1.

In all the embodiments described above, the other end-side terminals of the lamps 4 are connected to ground potential; however, for the purpose of making brightness gradient resulting from a leak current symmetric to improve illumination quality, the phase of the voltage applied to the one end-side terminals of the lamps 4 may be inverted by substantially 180° with respect to the phase of the voltage applied to the other end-side terminals of the lamps 4.

For example, the phase of the voltage applied to the one end-side terminals of the lamps 4 is inverted by substantially 180° with respect to the phase of the voltage applied to the other end-side terminals of the lamps 4 by modifying the illumination device for a display device according to the present invention shown in Figs. 1 and 2 in the following manner. That is, independent second holders 3 are provided one for each of the lamps 4 in the same manner as the first holders 2, the one end-side terminal of each of the lamps 4 being electrically connected to a first connector terminal of a corresponding one of the connectors 5 via a corresponding one of the first holders 2, which are conductive, and the other end-side terminal of each of the lamps 4 being electrically connected to a second connector terminal of the corresponding one of the connectors 5 via a corresponding one of the second holders 3 and a harness that is routed from the corresponding one of the second holders 3 to the corresponding one of the connectors 5; one output terminal of each of the inverter circuits 7 is electrically connected to a first connector terminal of a corresponding one of the inverter-side connectors (a terminal that is connected to the first connector terminal of a corresponding one of the connectors 5 when the connectors 5 are connected to the inverter-side connectors); the other output terminal of each of the inverter circuits 7 is electrically connected to a second connector terminal of the corresponding one of the inverter-side connectors (a terminal that is connected to the second connector terminal of the corresponding one of the conductors 5 when the connectors 5 are connected to the inverter-side connectors); and the phase of a voltage outputted from the one output terminal of each of the inverter circuits 7 is inverted substantially 180 degrees from the phase of a voltage outputted from the other output terminal of each of the inverter circuits 7.

Also included in the embodiment is a structure in which a plurality of any one of the above-described illumination devices for a display device are arranged next to one another in the direction of the main axis of the lamp (including such arrangement that the illumination devices are arranged after being rotated by 180 degrees) and the chassis of the plurality of the illumination devices for a display device are integrated with one another. This structure makes it possible to reduce the length of the lamps, and thus helps easily cope with upsizing of display devices.

A display device according to the present invention is provided with one of the above-described illumination devices for a display device according to the present invention and a display panel. Specific embodiments of the display device according to the present invention include, for example, a transmissive liquid crystal display device using the illumination device for a display device according to the present invention as a backlight and having a liquid crystal display panel disposed in front of the backlight.

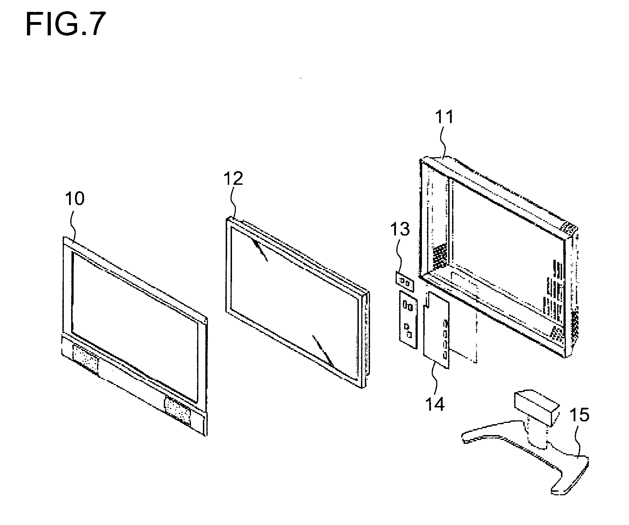

Fig. 7 is an example of an exploded perspective view showing the display device according to the present invention built as a liquid crystal television receiver. A transmissive liquid crystal display unit 12, a tuner 13, and a power supply 14 are accommodated between a front cabinet 10 and a rear cabinet 11, and the rear cabinet 11 is supported by a stand 15. The transmissive liquid crystal display unit 12 uses the illumination device for a display device according to the present invention as a backlight unit, and has a liquid crystal panel disposed in front of the backlight unit.

### Industrial Applicability

The illumination device for a display device according to the present invention can be used as an illumination device for various display devices; for example, as a backlight of a liquid crystal television receiver.

## Claims

1. An illumination device for a display device, comprising:
a chassis having a lamp disposed on a front face thereof and a connector provided on a rear face thereof; and
an inverter unit provided with an inverter circuit and an inverter-side connector that functions in combination with the connector,
a connector terminal of the connector being electrically connected to a terminal of the lamp, a connector terminal of the inverter-side connector being electrically connected to an output terminal of the inverter circuit, and positional relation between the chassis and the inverter unit being fixed by connecting the connector to the inverter-side connector,
wherein
a positioning through hole is provided in the inverter unit and a positioning marking is provided on the chassis to be positioned such that the positioning marking is visible through the positioning through hole in a state in which the inverter unit is fitted to a rear face of the chassis.

2. The illumination device for a display device according to claim 1, wherein a plurality of positioning through hole and positioning marking combinations are provided as the positioning through hole and the positioning marking.

3. A display device, comprising the illumination device for display device according to claim 1 or 2.

4. The display device according to claim 3, wherein the display device is a television receiver.
